# EUROPÄISCHE PATENTSCHRIFT

(11) **EP 2 085 527 B1**
(45) Veröffentlichungstag und Bekanntmachung des Hinweises auf die Patenterteilung: **27.01.2016**
(21) Anmeldenummer: 09001340.0
(22) Anmeldetag: 30.01.2009
(51) Int. Cl.: E03F 1/00, E03B 3/03

(54) **Anlage zur Regenwasserbewirtschaftung**
Facility for rainwater management
Installation d'exploitation d'eau de pluie

(30) Priorität: 01.02.2008 DE 102008007227
(43) Veröffentlichungstag der Anmeldung: 05.08.2009
(73) Patentinhaber: Fränkische Rohrwerke Gebr. Kirchner GmbH + Co KG, 97486 Königsberg/Bayern (DE)
(72) Erfinder: Wilhelm, Jörg, 72070 Tübingen (DE); Adams, Dietmar, 01328 Dresden (DE); Kriese, Jens, 14621 Schönwalde (DE); Haase, Reinhard, 32689 Kalletal (DE); Czesch, Christian, 93055 Regensburg (DE)
(74) Vertreter: Weickmann & Weickmann

(56) Entgegenhaltungen:
- DE-A1- 10 348 520
- DE-U1- 29 722 455
- GB-A- 2 410 282
- US-A1- 2006 163 147

## Beschreibung

Die Erfindung betrifft eine Anlage zur Regenwasserbewirtschaftung.

Bei Bauvorhaben kann das anfallende Regenwasser aufgrund der damit üblicherweise einhergehenden Flächenversiegelung nicht der natürlichen Versickerung durch die Oberbodenschicht zugeführt werden. Aus wasserwirtschaftlichen, ökonomischen und ökologischen Gründen wird aber zunehmend gefordert, anfallendes Regenwasser möglichst dort versickern zu lassen, wo es anfällt, statt es, wie bisher üblich, über das öffentliche Abwasserkanalnetz abzuleiten.

Gemäß einer ersten Alternative können hierzu beispielsweise unterirdische Versickerungsrigolen eingesetzt werden. Problematisch ist dabei jedoch, dass das Regenwasser im Erdreich versickert, ohne die belebte Oberbodenschicht zu durchströmen. Damit entfällt aber auch deren reinigende Wirkung durch die Filtrations- und Adsorptionsprozesse im Mutterboden. In vielen Fällen kann aber auf eine Reinigung des anfallenden Regenwassers nicht verzichtet werden. Insbesondere Regenwasserabflüsse von befestigten Flächen wie Verkehrsflächen oder Dächern sind häufig mit Schadstoffen belastet, die nicht ins Grundwasser oder in die Vorflut gelangen dürfen. Hierzu zählen insbesondere Schwermetalle, Mineralölkohlenwasserstoffe oder polyzyklische aromatische Kohlenwasserstoffe. Diese Schadstoffe stammen insbesondere aus dem Straßenverkehr (z.B. Abrieb von Reifen, Bremsbelägen, Verbrennungsrückstände), aus Luftverschmutzungen in Industriegebieten und von Metallionen-Abschwemmungen unbeschichteter Metalldächer.

Eine weitere Alternative stellen Muldenversickerungssysteme dar, die ersatzweise die vorstehend erläuterte Wirkung der natürlichen Versickerung sicherstellen sollen. Die Muldenversickerung hat allerdings bekannte Nachteile in den Bereichen Planung, Akzeptanz, Bauausführung und Funktion. Zum einen werden vergleichsweise große Flächen benötigt, um ausreichend Speichervolumen und Sickerfläche bereitstellen zu können. Dieser Platz ist gerade im innerstädtischen Bereich oft nicht vorhanden bzw. es steigen durch den erhöhten Flächenverbrauch die Baukosten. Zudem erfolgt der Zulauf zu Muldensystemen üblicherweise oberirdisch, beispielsweise über offene Rinnen, was zu planerischen Einschränkungen und Akzeptanzproblemen führt. Zum anderen ist die Akzeptanz der Mulden bei Anwohnern und Nutzern aber auch dadurch eingeschränkt, da der Wassereinstau nach Regenereignissen zu Gefahren und Belästigungen führen kann und teilweise eine Umfriedung notwendig macht. Zudem benötigen die Mulden einen hohen Pflegeaufwand (Grünpflege) und müssen freigehalten werden.

Aber auch hinsichtlich der Wirksamkeit einer Muldenversickerung kann es zu Problemen kommen. So sind beispielsweise typische Baufehler bekannt, die zu Funktionsstörungen der Regenwasserableitung bzw. zur Unwirksamkeit der Regenwasserreinigung führen können. Eine Prüfung der Wirksamkeit ist aber praktisch nicht möglich. Einen weiteren Nachteil stellt die Akkumulation von Schwermetallen und anderen Schadstoffen in der Bodenmatrix dar. Auch besteht die Gefahr einer Remobilisierung der Schwermetalle, so dass diese mit dem Sickerwasser weiter in Richtung Grundwasser transportiert werden.

Schadstoffe sind im Regenwasser überwiegend an Partikel gebunden, d.h. sie sind meist an kleine und sehr kleine Feststoffpartikel angelagert. Ein geringerer Anteil der Schadstoffe liegt zudem in gelöster Form vor. In der Fachwelt besteht daher das Bestreben, Regenwasserbewirtschaftungsanlagen zu entwickeln, die sowohl Sedimentation als auch Filtration als auch Adsorption als Reinigungsprozesse in sich vereinigen, da diese Prozesse jeweils für bestimmte Teile der vorstehend genannten Schadstoffgruppen ihren spezifischen Wirkungsschwerpunkt haben. Nur die Kombination aller drei Prozesse in einer Anlage verspricht ein befriedigendes Ergebnis.

Die Sedimentation eignet sich vorzugsweise zum Rückhalt von groben und feinen Partikeln. Sie wird durch die Verringerung der Fließgeschwindigkeit des Wassers ermöglicht, welche ihrerseits durch die Bereitstellung entsprechend großer Volumina erreicht wird. Die Wirksamkeit der Sedimentation gerade gegenüber feinsten Partikeln kann durch die Auslegung und Ausbildung der Anlage beeinflusst werden, ist aber durch wirtschaftliche Faktoren, beispielsweise die Anlagengröße, begrenzt. Zudem können im Regenwasser gelöste Stoffe nicht mittels Sedimentation entfernt werden. Da Filter bei geeigneter Wahl des Filtermaterials nicht nur feinste Partikel zurückhalten, sondern gleichzeitig auch gelöste Stoffe adsorbieren können, stellen sie eine ideale Ergänzung zur Sedimentation dar.

Allerdings haben Filter engere hydraulische Grenzen, wodurch nur ein vergleichsweise kleiner Volumenstrom mit handhabbaren Filtergrößen behandelt werden kann. Der Regenwasserzufluss variiert aber abhängig vom Regenereignis sehr stark. Würden Filter auf den maximal zu erwartenden Zufluss ausgelegt, beispielsweise ein Starkregenereignis, wie es laut der Wetterstatistik des jeweiligen Standorts nur alle fünf Jahre einmal vorkommt, so müssten sie sehr groß gebaut werden, um den größten zu erwartenden Volumenstrom behandeln zu können. Da solche Starkregenereignisse aber nur selten auftreten, wäre der Filter in der übrigen Zeit nur sehr gering ausgelastet und damit unwirtschaftlich. Wenn der Filter auf eine wirtschaftliche bzw. handhabbare Größe beschränkt werden soll, können dann nur relativ kleine Flächen angeschlossen werden. Bekannte Verfahren legen den Filter daher so groß aus, dass die Mehrzahl der Regenereignisse behandelt werden kann. Für stärkere Regenereignisse ist ein Überlauf vorgesehen (siehe etwa DE 102 31 241 A1 und DE 20 2006 018 117 U1).

Nachteilig bei Anlagen mit Überlauf ist, dass die Regenmenge, die bei stärkerem Regen über den Überlauf abgeleitet wird, nicht behandelt, d.h. nicht gereinigt werden kann. Ein weiterer Nachteil der aus den vorgenannten Druckschriften bekannten Anlagen besteht darin, dass die Filtration direkt nach einer relativ kleinen Sedimentationszone im ungedrosselten Regenwasserstrom des Anlagenzulaufs stattfindet. Dadurch können nicht abgesetzte bzw. bei stärkerem Regen wieder aufgewirbelte Feinstoffe direkt auf den Filter gelangen, diesen zusetzen und so dessen Standzeit deutlich reduzieren.

In diesem Zusammenhang ist es auch nachteilig, dass die hydraulische Leistung eines sich allmählich zusetzenden Filters sinkt. Dadurch fließt das Wasser auch bei weniger starken Regenereignissen in zunehmendem Maße über den Überlauf ab. Damit sinkt aber die Behandlungsleistung der Anlage während des Betriebes kontinuierlich. Hinzu kommt, dass ein kolmatierter Filter wegen des vorhandenen Überlaufes kaum bemerkt wird und somit immer größere Wassermengen unbehandelt bleiben.

Einen Schritt in Richtung einer Lösung der vorstehend diskutierten Nachteile macht die aus der gattungsbildenden DE 103 48 520 B4 bekannte Anlage. Diese Anlage umfasst einen Schacht, in welchem in Strömungsrichtung nach dem Zulauf ein Grobfilter vorgesehen ist, in welchem größere Partikel zurückgehalten werden. Unterhalb des Grobfilters ist eine Kammer vorgesehen, an deren einer Seite ein Filter angeordnet ist, der von dem Abwasser in im Wesentlichen horizontaler Richtung durchströmt wird. An die Abflussseite des Filters schließt sich der Ablauf an. Seitlich des Schachts ist ein Zusatzpeichervolumen vorgesehen, das mit der Kammer in Flüssigkeitsaustauschverbindung steht. Das bei einem Regenereignis anfallende Wasser wird in der Kammer und dem Zusatzspeichervolumen zwischengespeichert, so dass der Filter für einen begrenzten Volumenstrom ausgelegt werden kann. Nach dem Regenereignis läuft das von Kammer und Zusatzspeichervolumen gebildete Speichervolumen allmählich leer, wobei das Wasser über den Filter geführt wird. Sedimentation findet dabei zum einen in der Kammer und zum anderen in dem Zusatzspeichervolumen statt. Für die erforderliche Filtration und Adsorption sorgt der Filter.

Nachteilig an der bekannten Anlage ist aber, dass sie nach wie vor einen Überlauf umfasst, durch welchen das vom Zulauf in den Schacht einströmende Regenwasser unter Umgehung von Grobfilter, Kammer, Zusatzspeicher und Filter unmittelbar, d.h. ungereinigt, zum Ablauf gelangen kann.

Ferner offenbart die GB 2 410 282 A, welche die Merkmale des Oberbegriffs von Anspruch 1 umfasst, eine Anordnung zum Ableiten und Versickern von Regenwasser von einer Straßenoberfläche oder dergleichen. Hierzu besteht die Straßenoberfläche aus einer porösen, d.h. wasserdurchlässigen Betonschicht. Darunter ist eine ebenfalls poröse Grundlagenschicht angeordnet, die dem von oben eintretende Regenwasser relativ viel Platz in den Hohlräumen bietet, um sich dort, zumindest vorübergehend, zu sammeln. Unter der Grundlagenschicht befindet sich eine halbdurchlässige Membran, durch welche das Regenwasser von oben aus der Grundlagenschicht kommend langsam hindurchtreten kann, um anschließend im Erdreich zu versickern. Ziel dieser Anordnung ist es dabei insbesondere, dass das Regenwasser während seiner Verweildauer in der Grundlagenschicht durch Bakterien auf natürliche Weise gereinigt wird, ehe es versickert.

Nachteilig an dieser Anordnung ist jedoch, dass sie nicht ohne ein Drainagerohr auskommt, dessen eine Öffnung ein gutes Stück oberhalb der halbdurchlässigen Membran in der Grundlagenschicht angeordnet ist. Das Drainagerohr ermöglicht es dem Regenwasser somit, ggf. auch direkt, d.h. ohne durch die halbdurchlässige Membran hindurchzutreten, im Erdreich zu versickern. Somit wird das Regenwasser weder durch Bakterien gereinigt noch von der halbdurchlässigen Membran gefiltert, ehe es im Erdreich versickert.

Der Vollständigkeit halber sei noch erwähnt, dass auch die DE 297 22 455 U1 eine Vorrichtung zur Ableitung von Regenwasser offenbart. Dabei wird jedoch auf ein Muldenversickerungssystem zurückgegriffen, das die eingangs bereits genannten Nachteile, welche diese Systeme stets auszeichnen, aufweist.

Demgegenüber ist es Aufgabe der vorliegenden Erfindung, eine Regenwasserbewirtschaftungsanlage der eingangs genannten Art bereitzustellen, bei welcher sichergestellt ist, dass nur gereinigtes Regenwasser zum Ablauf gelangt, und wobei den Zuflun vom Refluwassen aus dem Speichervolumen zum Filter angepasst werden Kann.

Diese Aufgabe wird erfindungsgemäß durch eine Regenwasserbewirtschaftungsanlage gemäß Anspruch 1 gelöst.

Durch die erfindungsgemäße Regenwasserbehandlungsanlage kann zum einen sichergestellt werden, dass alles Wasser, das die Anlage durch den Ablauf verlässt, zuvor gereinigt worden ist. Zum anderen ist es möglich, aus der Beobachtung der zeitlichen Veränderung des Füllstands des Speichervolumens während einer regenfreien Zeitdauer Rückschlüsse auf den Zustand des Filters zu ziehen. Je stärker der Filter kolmatiert ist, desto geringer ist nämlich die pro Zeiteinheit durch ihn hindurchströmende Wassermenge.

Ein weiterer bedeutender Vorteil gegenüber der gattungsbildenden Anlage kann dadurch erzielt werden, dass die eine Öffnung des Filters, nämlich dessen Flüssigkeitseintrittsöffnung oder dessen Flüssigkeitsaustrittsöffnung, an der Unterseite des Filters angeordnet ist, während die jeweils andere Öffnung des Filters an der Oberseite des Filters angeordnet ist. Durch diese Maßnahme kann sichergestellt werden, dass der Filter in im Wesentlichen vertikaler Richtung und somit stets vollständig durchströmt wird. Wird der Filter nämlich wie bei der gattungsbildenden Anlage in im Wesentlichen horizontaler Richtung durchströmt, so ist der wirksame Filterquerschnitt vom Wasserstand im Speichervolumen abhängig, so dass der Filter bei abnehmendem Wasserstand nur noch in seinem unteren Abschnitt durchflossen wird. Da die Mehrzahl der Regenereignisse eine geringe Intensität hat, wird der Filter in seinem unteren Abschnitt viel stärker belastet als im oberen Teil. Dies führt im unteren Filterabschnitt zu stärker abnehmendem Adsorptionsvermögen und stärkerer Kolmation und damit zu unwirtschaftlichem Betrieb. All diese Nachteile können durch eine im Wesentlichen vertikale Durchströmungsrichtung vermieden werden.

Ist die Flüssigkeitseintrittsöffnung an der Unterseite und die Flüssigkeitsaustrittsöffnung an der Oberseite des Filters angeordnet, so wird der Filter dadurch von unten nach oben durchströmt. Hierdurch kann zum einen eine langsamere Strömung erzielt werden, so dass das Wasser besser gefiltert wird. Zum anderen wird dadurch das Filtermaterial durch die Strömung des Wassers beständig entgegen der Wirkung der Schwerkraft aufgelockert, so dass es stets seine volle Wirkung entfalten kann. Festzuhalten ist jedenfalls, dass der Filter auch dann, wenn er von oben nach unten durchströmt wird, ein technischer Filter ist, d.h. er nicht von einer Schicht Mutterboden gebildet ist.

Wenn die Flüssigkeitsaustrittsöffnung des Filters unterhalb der Flüssigkeitsaustrittsöffnung des Speichervolumens, allenfalls auf gleicher Höhe wie die Flüssigkeitsaustrittsöffnung des Speichervolumens, angeordnet ist, so kann sichergestellt werden, dass das Speichervolumen bis in dem gewünschten Maße leerlaufen kann. Relevant ist dabei selbstverständlich ein Vergleich der Lage der unteren Ränder der Flüssigkeitsaustrittsöffnungen von Speichervolumen und Filter.

Wenn die Flüssigkeitsaustrittsöffnung des Filters unterhalb des Ablaufs, allenfalls auf gleicher Höhe wie der Ablauf, angeordnet ist, kann unabhängig von seiner Durchströmungsrichtung sichergestellt werden, dass das Filtermaterial stets mit Flüssigkeit benetzt bleibt, so dass es nicht austrocknet und damit stets seine volle Wirkung behält.

Alternativ kann eine vom Ablauf ausgehende Sogwirkung, die den Filter leerzusaugen versucht, auch dadurch verhindert werden, dass eine Entlüftung einer den Filter und den Ablauf verbindenden Verbindungsleitung vorsehen ist, bspw. in Form einer von der Verbindungsleitung abgezweigten Entlüftungsleitung.

In Weiterbildung der Erfindung wird vorgeschlagen, dass der wenigstens eine Filter in einem unabhängig von dem Speichervolumen im Erdreich verbauten Schacht angeordnet ist. Durch diese dezentrale Anordnung des wenigstens einen Filters kann der Gesamtaufbau der Anlage vereinfacht und ihre Wartung erleichtert werden.

Unabhängig von der Anordnung des wenigstens einen Filters kann das Speichervolumen einen Stützkörper umfassen, wobei zumindest die Bodenfläche und die Seitenflächen, vorzugsweise auch die Deckenfläche, dieses Stützkörpers gegen den Durchtritt von Flüssigkeit abgedichtet sind. Auf diese Weise kann das Speichervolumen nach Art eines offenen oder geschlossenen Rückhaltebeckens ausgebildet sein. Dabei können zur Abdichtung miteinander verbundene, vorzugsweise aus Kunststoff gefertigte, Folien oder Platten vorgesehen sein.

Der Stützkörper kann beispielsweise aus einer Mehrzahl von Rigoleneinheiten gebildet sein, beispielsweise den aus der EP 1 260 640 A1 bekannten Rigoleneinheiten. Die Gitterstruktur dieser Rigoleneinheiten erhöht die Stabilität des Stützkörpers und sorgt gleichzeitig für die Beruhigung der Strömung, was die Sedimentation von im Wasser mitgeführten Partikeln weiter begünstigt. Um diesen Effekt noch zu verstärken, kann wenigstens eine Rigoleneinheit zumindest der Bodenfläche des Stützkörpers benachbart wenigstens ein die Strömung von Flüssigkeit behinderndes Element aufweisen. Grundsätzlich ist es jedoch auch denkbar, das Speichervolumen als, beispielsweise aus Beton gefertigte, Wanne auszubilden.

Unabhängig von der jeweils für das Speichervolumen gewählten Bauweise ist es vorteilhaft, wenn die Flüssigkeitsaustrittsöffnung des Speichervolumens, genauer gesagt deren unterer Rand, um einen vorbestimmten Abstand oberhalb der inneren Bodenfläche des Speichervolumens angeordnet ist. Auf diese Weise kann nämlich sichergestellt werden, dass die Sedimentschicht am Boden des Speichervolumens stets mit Wasser bedeckt ist. Hierdurch kann das Sediment bei der Reinigung des Speichervolumens leicht aufgeschlämmt und abgepumpt werden.

Um Überschwemmungen der an die Regenwasserbewirtschaftungsanlage angeschlossenen Flächen weitestgehend verhindern zu können, wird ferner vorgeschlagen, das Fassungsvermögen des Speichervolumens derart zu bemessen, dass es auch die bei einem Starkregenereignis anfallende Menge an Regenwasser zwischenzuspeichern vermag. Wie vorstehend bereits erwähnt, wird dabei unter einem "Starkregenereignis" ein Regenereignis verstanden, wie es laut der Wetterstatistik des jeweiligen Standorts der Anlage nur alle fünf Jahre einmal vorkommt. Je nach Standort kann das ein kurzer aber extrem starker Regenguss oder auch ein lang anhaltendes schwächeres Regenereignis sein. Für das Gebiet der Bundesrepublik Deutschland kann man mit guter Genauigkeit das stärkste etwa eine Stunde dauernde Regenereignis, wie es laut der Wetterstatistik des jeweiligen Standorts der Anlage nur alle fünf Jahre einmal vorkommt, als das relevante Starkregenereignis definieren.

Die dabei niedergehende Regenwassermenge variiert jedoch von Norden nach Süden erheblich. Während im Norden, beispielsweise in Kiel bei dem relevanten einstündigen Starkregenereignis im Mittel nur etwa 55 l/(s•ha) Niederschlag fallen, sind es im Süden, beispielsweise in Traunstein, etwa 100 l/(s•ha). Die Grundsätze, die bei der Bestimmung der Größe des Speichervolumens zu beachten sind, welches zum Zwischenspeichern der hieraus resultierenden Wassermenge erforderlich ist, sind in dem Arbeitsblatt "DWA-A 138: Planung, Bau und Betrieb von Anlagen zur Versickerung von Niederschlagswasser. DWA Deutsche Vereinigung für Wasserwirtschaft, Abwasser und Abfall e.V., Apr. 2005" niedergelegt. Man sieht leicht ein, dass neben dem für die Aufnahme von Flüssigkeit nutzbaren Anteil des vom Speichervolumen eingenommenen Bauraums auch andere Parameter eingehen, beispielsweise die Größe der Versickerungsfläche, die mittlere Durchlässigkeit des Erdbodens im Bereich der Versickerungsfläche und dergleichen in der "DWA-A 138" genannte Parameter.

In Weiterbildung der Erfindung wird vorgeschlagen, dass die Flüssigkeitsaustrittsöffnung des Filters mit einer Versickerungsvorrichtung verbunden ist, deren Austrittsöffnungen einen Ablauf bilden. Diese Versickerungsvorrichtung kann beispielsweise perforierte, vorzugsweise aus Kunststoff gebildete, Rohre umfassen, die gewünschtenfalls in einem Kiesbett verlegt sein können, oder eine herkömmliche Versickerungsrigole. In beiden Fällen ist es möglich, die Versickerungsvorrichtung unterhalb des Speichervolumens anzuordnen. Grundsätzlich kann die Versickerungsvorrichtung aber auch neben dem Speichervolumen angeordnet sein. Zusätzlich oder alternativ kann die Flüssigkeitsaustrittsöffnung des wenigstens einen Filters aber auch mit einem Regenwasserkanal oder einem Oberflächengewässer verbunden sein.

Unabhängig von der Anordnung der Versickerungsvorrichtung ist in einer Verbindungsleitung, welche eine Flüssigkeitsaustrittsöffnung des Speichervolumens mit einer Flüssigkeitseintrittsöffnung des Filters verbindet, eine Drosselvorrichtung vorgesehen. Mittels dieser Drosselvorrichtung kann die dem wenigstens einen Filter pro Zeiteinheit zugeführte Wassermenge an die Versickerungsrate der Versickerungsvorrichtung, d.h. die durch die Versickerungsvorrichtung pro Zeiteinheit versickernde Wassermenge, angepasst werden. Dies kann beispielsweise dann von Vorteil sein, wenn die Versickerungsvorrichtung für einen Filterdurchsatz bei mittlerer Kolmation ausgelegt ist. In diesem Fall kann nach einer Reinigung des Filters nämlich die Zufuhr von Wasser zum Filter zunächst für eine bestimmte Zeitspanne gedrosselt werden. Zudem ermöglicht das Vorsehen einer Drosselvorrichtung, eine vom Flüssigkeitsstand im Speichervolumen im Wesentlichen unabhängige Flüssigkeitszufuhr zu dem wenigstens einen Filter.

Alternativ zu einer Drosselvorrichtung, die als Verengung des Strömungsquerschnitts der Verbindungsleitung zwischen der Flüssigkeitsaustrittsöffnung des Speichervolumens und der Flüssigkeitseintrittsöffnung des Filters ausgebildet ist, kann die Drosselvorrichtung auch von einer, vorzugsweise elektrisch betriebenen, Pumpe gebildet sein, beispielsweise einer Pumpe mit veränderbarer Förderleistung. Der Einsatz einer Pumpe gewährt zudem eine größere konstruktive Freiheit hinsichtlich des Ortes und insbesondere der Höhe der Anordnung des wenigstens einen Filters. So braucht insbesondere bei der relativen Anordnung von Speichervolumen, Filter und Ablauf das Freispiegelprinzip nicht mehr beachtet zu werden, sondern kann der Filter in einer bei Wartungsarbeiten leicht erreichbaren Position angeordnet werden, beispielsweise auf Höhe der Deckenwandung des Speichervolumens oder sogar noch höher.

Ist die Flüssigkeitsaustrittsöffnung des wenigstens einen Filters, wie vorstehend erläutert, allenfalls auf gleicher Höhe angeordnet wie der von einer Versickerungsvorrichtung gebildete Ablauf, so kann auf das Vorsehen einer Drosselvorrichtung verzichtet werden, da sich die Strömungsrate in diesem Fall automatisch auf die jeweils geringste Strömungsrate einstellt, und zwar unabhängig davon, ob diese durch den Filter oder die Versickerungsvorrichtung begrenzt ist.

Um das Speichervolumen vor allzu starkem Anfall von Sediment schützen zu können, ist in Strömungsrichtung des Regenwassers zwischen einem Zulauf und dem Speichervolumen wenigstens eine Vorreinigungsvorrichtung, beispielsweise wenigstens eine Sedimentationsvorrichtung, vorgesehen, in welcher das Regenwasser vorgereinigt wird. Dabei ist jeder Zulauf derart mit wenigstens einer Vorreinigungsvorrichtung verbunden, dass das gesamte in die Anlage eingeleitete Regenwasser zwangsweise einer Vorreinigungsvorrichtung zugeführt wird. Die Vorreinigungsvorrichtung kann beispielsweise von einem Sedimentationsrohr gebildet sein, wie es aus der DE 10 2004 008 960 A1 bekannt ist. Die Reinigung des Regenwassers von Partikeln erfolgt in diesem Falle in drei Stufen: in der Sedimentationsvorrichtung erfolgt eine Grobsedimentation, im Speichervolumen erfolgt eine Feinsedimentation und im Filter werden Feinstpartikel zurückgehalten und gelöste Stoffe adsorbiert.

Das Vorsehen wenigstens einer derartigen Vorreinigungsvorrichtung ist vor allem dann bevorzugt, wenn das Regenwasser das wenigstens eine Speichervolumen auch im Nebenschluss umgehen kann.

Um die Reinigungswirkung der Sedimentationsvorrichtung erhöhen zu können, kann diese beispielsweise einen Sammelraum für Sedimente umfassen. Ferner ist es zur Erhöhung der Reinigungswirkung vorteilhaft, wenn die Sedimentationsvorrichtung Mittel umfasst, welche das Wiederaufwirbeln von abgesetzten Sedimente verhindert, beispielsweise einen Strömungstrenner. Wenn die Sedimentationsvorrichtung derart ausgebildet ist, dass zumindest die abgesetzten Sedimente stets mit Regenwasser bedeckt sind, so kann hierdurch sichergestellt werden, dass die Sedimentschicht am Boden der Sedimentationsvorrichtung, beispielsweise am Boden des Sammelraums, stets mit Wasser bedeckt ist. Hierdurch kann das Sediment bei der Reinigung des Speichervolumens leicht aufgeschlämmt und abgepumpt werden.

Die Erfindung wird im folgenden an Ausführungsbeispielen anhand der beigefügten Zeichnung näher erläutert werden. Es stellt dar:
- Figur 1: eine grob schematische Darstellung einer ersten Ausführungsform einer erfindungsgemäßen Regenwasserbehandlungsanlage; und
- Figur 2: eine grob schematische Darstellung eines Teils einer zweiten Ausführungsform einer erfindungsgemäßen Regenwasserbehandlungsanlage.

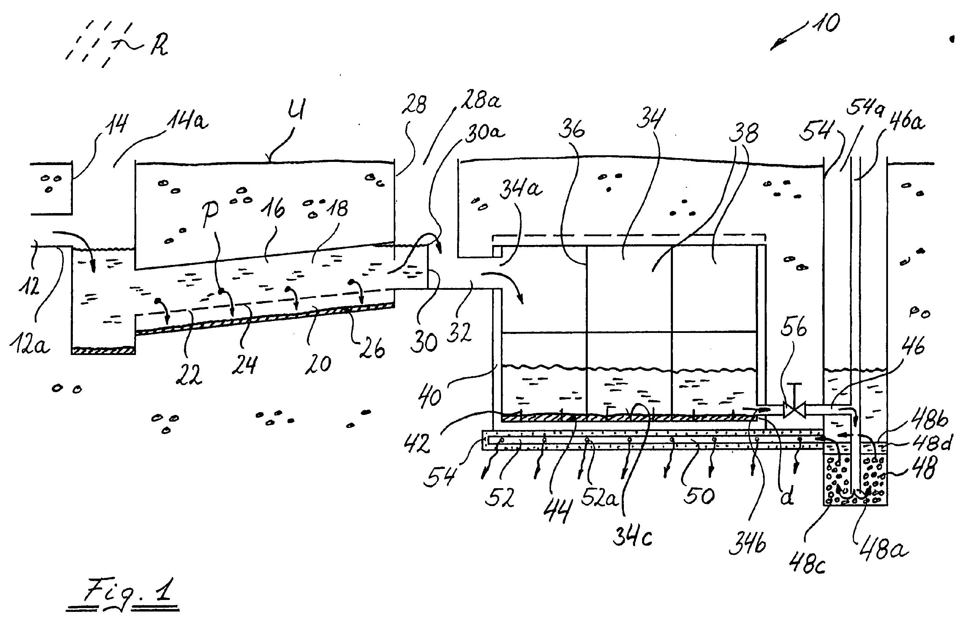

In Figur 1 ist eine erfindungsgemäße Regenwasserbehandlungsanlage ganz allgemein mit 10 bezeichnet. Die Regenwasserbehandlungsanlage 10 umfasst einen Zulauf 12, durch den Regenwasser in die Anlage 10 eingeleitet wird. Das Regenwasser, das bei einem Regenereignis R auf der Erdoberfläche U niedergeht, wird in (nicht dargestellten) Gullis gesammelt und dem Zulauf 12 zugeführt.

Vom Zulauf 12 gelangt das Regenwasser zunächst in einen Zulaufschacht 14, von dem aus es in ein Sedimentationsrohr 16 geleitet wird, in welchem eine Grobsedimentation stattfindet. Der Aufbau und die Funktion des Sedimentationsrohrs 16 entsprechen jenem, das in der DE 10 2004 008 960 A1 dargestellt und beschrieben ist. Die den Aufbau und die Funktion des Sedimentationsrohrs betreffende Offenbarung der DE 10 2004 008 960 A1 werden daher hiermit vollinhaltlich in Bezug genommen und zum Teil der Offenbarung der vorliegenden Anmeldung gemacht.

Das Sedimentationsrohr 16 umfasst einen Strömungsraum 18 und einen Sedimentationsraum 20, der von dem Strömungsraum 18 durch einen mit Durchbrechungen 22 versehenen Strömungstrenner 24 abgetrennt ist. Durch die Durchbrechungen 22 können Partikel P, die zusammen mit dem Regenwasser vom Zulaufschacht 14 in den Strömungsraum 18 des Sedimentationsrohrs 16 eingeleitet werden, in den Sedimentationsraum 20 gelangen und sich dort als Sedimentschicht 26 ablagern. Das Sedimentationsrohr 16 mündet in einen Zwischenschacht 28, in welchem eine Stauwand 30 angeordnet ist, deren oberer Rand 30a unterhalb des unteren Randes 12a des Zulaufs 12 angeordnet ist. Auf diese Weise ist sichergestellt, dass das Sedimentationsrohr 16 stets mit Wasser gefüllt ist, was zum einen bei Regenereignissen geringer Intensität die Sedimentation unterstützt und zum anderen sicherstellt, dass die Sedimentschicht 26 nicht austrocknet und somit bei der Wartung der Anlage 10 in einfacher Weise aufgeschlämmt und abgepumpt werden kann. Zur Erleichterung der Sedimentation steigt das Sedimentationsrohr 16 zudem in Strömungsrichtung des Regenwassers, das heißt vom Zulaufschacht 14 zum Zwischenschacht 28 leicht an, um die Strömungsgeschwindigkeit zu verlangsamen.

Regenwasser, welches die Stauwand 30 überwindet, gelangt über eine Rohrleitung 32 in ein Speichervolumen 34, und zwar durch dessen Eintrittsöffnung 34a. In dem dargestellten Ausführungsbeispiel ist das Speichervolumen 34 als Rigole ausgebildet, welche einen Stützkörper 36 umfasst, der aus einer Mehrzahl von Rigoleneinheiten 38 zusammengesetzt ist. Derartige Rigoleneinheiten 38 sind aus der EP 1 260 640 A1 bekannt, deren gesamte Offenbarung daher hiermit vollinhaltlich, d.h. nicht nur hinsichtlich Aufbau und Funktion der Rigoleneinheiten und der aus diesen gebildeten Rigole, sondern insbesondere auch hinsichtlich der Reinigbarkeit dieser Rigoleneinheiten, in Bezug genommen und zum Teil der Offenbarung der vorliegenden Anmeldung gemacht wird.

Das Speichervolumen 34 ist gegenüber dem es umgebenden Erdreich mittels einer wasserundurchlässigen Umhüllung 40 abgedichtet, welche zumindest die Seitenflächen und die Bodenfläche bedeckt. Bei der unterirdischen Verbauung, wie sie in Figur 1 dargestellt ist, ist vorzugsweise auch die Deckenfläche von der wasserundurchlässigen Umhüllung 40 abgedichtet, was in Figur 1 gestrichelt angedeutet ist. Zudem ist die Größe des Speichervolumens 34 derart bemessen, dass es auch die bei einem Regenereignis hoher Intensität, das heißt einem Starkregenereignis, anfallende Wassermenge aufnehmen kann.

Durch die vertikalen Trennwände der Rigoleneinheiten 38, und insbesondere deren Gitterstruktur, wird die Strömung des Regenwassers in dem Speichervolumen 34 verlangsamt, was die Sedimentation begünstigt. Zudem können am Boden des Speichervolumen 34 Strömungshindernisse 42 angeordnet sein, welche das Aufwirbeln der sich am Boden des Speichervolumens 34 ablagernden Sedimentschicht 44 durch in das Speichervolumen 34 einströmendes Regenwasser behindern. Eine Austrittsöffnung 34b des Speichervolumens 34, insbesondere deren unterer Rand, ist um einen vorbestimmten Abstand d oberhalb der Bodenfläche 34c des Speichervolumens 34 angeordnet. Auf diese Weise ist sichergestellt, dass die Sedimentschicht 44 auch dann nicht austrocknen kann, wenn sich das Speichervolumen 34 vollständig entleert hat. Somit kann die Sedimentschicht 44 bei der Wartung der Anlage 10 in einfacher Weise aufgeschlämmt und abgepumpt werden:

Das über die Austrittsöffnung 34b das Speichervolumen 34 verlassende Wasser wird über eine Rohrleitung 46 zu einem Filter 48 geleitet. Dabei befindet sich die Austrittsöffnung der Rohrleitung 46, die gleichzeitig die Eintrittsöffnung 48a des Filters 48 bildet, an der Unterseite des Filters 48. In dem Filter 48 steigt das Wasser in im wesentlichen vertikaler Richtung langsam nach oben und verlässt den Filter 48 durch die Austrittsöffnung 48b des Filters 48, die an dessen Oberseite angeordnet ist. Durch diese Anordnung wird das Filtermaterial, das infolge der Schwerkraft zu komprimieren neigt, durch das es durchströmende Regenwasser aufgelockert. Wie in Figur 1 dargestellt ist, kann der Filter 48 eine Mehrzahl von Schichten von Filtermaterial umfassen, beispielsweise eine erste Schicht 48c groberen Filtermaterials, die überwiegend der Adsorption gelöster Stoffe dient, und eine zweite Schicht 48d, die überwiegend der Filtration feinster Partikeln dient.

Die Austrittsöffnung 48b des Filters 48 ist mit einem Ablauf 50 verbunden, der in dem dargestellten Ausführungsbeispiel von einer Mehrzahl von Versickerungsrohren 52 gebildet ist. Die Versickerungsrohre 52 sind in einem unterhalb des Speichervolumens 34 angeordneten Kiesbett 54 gelagert und weisen Durchbrechungen 52a auf, durch welche das gereinigte Regenwasser in das Erdreich gelangen kann. Zusätzlich oder alternativ zu den Versickerungsrohren 52 kann der Ablauf 50 aber auch einen Anschluss an ein Kanalsystem oder ein Oberflächengewässer umfassen.

In dem dargestellten Ausführungsbeispiel ist die Austrittsöffnung 48b des Filters 48, d.h. ist die Oberseite des Filters 48, nicht nur unterhalb der Austrittsöffnung 34b des Speichervolumen 34, insbesondere des unteren Rands der Austrittsöffnung 34b, angeordnet, sondern auch unterhalb des Ablaufs 50, insbesondere dessen unterem Rand, oder allenfalls auf gleicher Höhe wie dieser. Hierdurch kann sichergestellt werden, dass das gesamte Filtermaterial des Filters 48 stets befeuchtet bleibt und nicht austrocknet. Auf diese Weise kann es seine Reinigungswirkung auch dann, wenn es erst nach einer längeren Trockenzeit wieder zu einem Regenereignis kommt, sofort voll entfalten.

Gemäß Figur 1 ist der Filter 48 in einem Filterschacht 54 angeordnet, so dass der Filter 48 bei Wartungsarbeiten leicht zugänglich ist, insbesondere leicht ausgetauscht werden kann. In dem Filterschacht 54 ist zudem ein Entlüftungsrohr 46a angeordnet, das mit der Rohrleitung 46 verbunden ist. Zur Rohrleitung 46 ist ferner nachzutragen, dass diese gewünschtenfalls mit einer verstellbaren Drossel 56 versehen sein kann, um den Zufluss von Regenwasser aus dem Speichervolumen 34 zu dem Filter 48 erforderlichenfalls an den Ablauf aus dem Filter 48, beispielsweise die Versickerung durch die Versickerungsrohre 52, anpassen zu können.

Nachzutragen ist noch, dass die Schächte 14, 28 und 54 über Zugangsöffnungen 14a, 28a, 54a von der Erdoberfläche U her zugänglich sind, beispielsweise zu Wartungszwecken. Selbstverständlich sind die Zugangsöffnungen 14a, 28a, 54a normalerweise mittels geeigneter Deckel bedeckt.

Zusammenfassend ist die Reinigung des anfallenden Regenwassers bei der erfindungsgemäßen Regenwasserbehandlungsanlage 10 in eine Sedimentation grober Partikel im Sedimentationsrohr 16, eine Sedimentation feiner Partikel im Speichervolumen 34 und eine Filtration feinster Partikel und Adsorption gelöster Stoffe im Filter 48 unterteilt. Der Hauptvorteil der erfindungsgemäßen Regenwasserbehandlungsanlage 10 gegenüber herkömmlichen Anlagen besteht darin, dass kein auch noch so kleiner Bruchteil des anfallenden Regenwassers die Anlage 10 ungereinigt verlassen kann, da die Anlage 10 Überlauf-frei ausgebildet ist. Zudem fallen die zurückgehaltenen Schadstoffe an definierter Stelle an und können von dort in einfacher Weise umweltgerecht entsorgt werden.

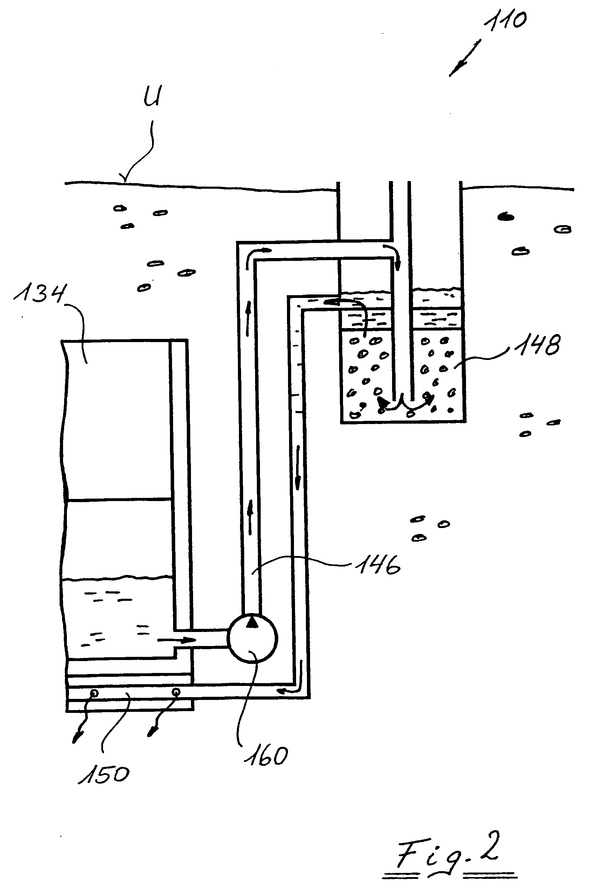

In Figur 2 ist eine weitere Ausführungsform einer erfindungsgemäßen Regenwasserbehandlungsanlage dargestellt, deren Aufbau sich von jenem der Ausführungsform gemäß Figur 1 lediglich hinsichtlich des an das Speichervolumen anschließenden Abschnitts unterscheidet. Daher ist in Figur 2 auch nur dieser Teil dargestellt. Ferner sind in Figur 2 analoge Teile mit den gleichen Bezugszeichen versehen wie in Figur 1, jedoch vermehrt um die Zahl 100. Schließlich wird die Regenwasserbehandlungsanlage 110 gemäß Figur 2 im folgenden nur insoweit beschrieben, als sie sich von der Regenwasserbehandlungsanlage 10 gemäß Figur 1 unterscheidet, auf deren Beschreibung hiermit ansonsten ausdrücklich verwiesen sei.

Der wesentliche Unterschied zwischen der Regenwasserbehandlungsanlage 10 und der Regenwasserbehandlungsanlage 110 besteht darin, dass bei der Regenwasserbehandlungsanlage 110 in der Leitung 146, die vom Speichervolumen 134 zum Filter 148 führt, anstelle der Drossel 56 eine Pumpe 160 angeordnet ist. Da diese Pumpe 160 elektromotorisch betrieben ist, lässt sich die Zufuhrrate zum Filter 148, d.h. die dem Filter 148 pro Zeiteinheit zugeführte Wassermenge, beispielsweise in Abhängigkeit des Kolmationszustands des Filters 148, einfacher steuern als bei der Ausführungsform gemäß Figur 1. Darüber hinaus ermöglicht die Pumpe 160 eine vom Freispiegelprinzip unabhängige Anordnung des Filters 148. Dieses Freispiegelprinzip muss bei der Ausführungsform gemäß Figur 1 beachtet werden, um sicherzustellen, dass das Filtermaterial stets mit Flüssigkeit benetzt ist. Wie in Figur 2 dargestellt ist, kann der Filter 148 bei Einsatz einer Pumpe 160 erheblich höher und damit erheblich näher an der Erdoberfläche U angeordnet werden, wodurch er für Wartungsarbeiten einfacher zugänglich ist. Selbstverständlich ist bei einer sehr oberflächennahen Anordnung, wie sie in Figur 2 dargestellt ist, eine relativ leistungsstarke Pumpe 160 erforderlich, um den dargestellten Höhenunterschied überwinden zu können. Die Unabhängigkeit der Anordnung des Filters 148 von der Anordnung des Speichervolumen 134 und des Ablaufs 150 lässt sich jedoch auch mit einer leistungsschwächeren Pumpe 160 erzielen.

## Patentansprüche

1. Anlage (10) zur Regenwasserbewirtschaftung, umfassend:
- wenigstens einen Zulauf (12), durch welchen ungereinigtes Regenwasser in die Anlage (10) eingeleitet wird,
- wenigstens ein Speichervolumen (34) zum Zwischenspeichern von Regenwasser,
- wenigstens einen Filter (48), welcher das Regenwasser filtert,
- wenigstens einen Ablauf (50), durch welchen gefiltertes Regenwasser die Anlage (10) wieder verlässt, und
- zwischen dem wenigstens einen Zulauf (12) und dem wenigstens einen Speichervolumen (34) wenigstens eine Vorreinigungsvorrichtung (16), in welcher das Regenwasser vorgereinigt wird, wobei jeder Zulauf (12) derart mit wenigstens einer Vorreinigungsvorrichtung (16) verbunden ist, dass das gesamte in die Anlage (10) eingeleitete Regenwasser zwangsweise einer Vorreinigungsvorrichtung (16) zugeführt wird,
- wobei jeder Zulauf (12) derart mit dem wenigstens einen Speichervolumen (34) und jedes Speichervolumen (34) derart mit dem wenigstens einen Filter (48) verbunden ist oder/und jeder Zulauf (12) derart mit dem wenigstens einen Filter (48) verbunden ist, dass das gesamte Regenwasser zwangsweise dem Filter (48) zugeführt wird,
- wobei jeder Filter (48) mit dem wenigstens einen Ablauf (50) verbunden ist, und wobei die Anlage (10) eine Verbindungsleitung (46) aufweist, welche eine Flüssigkeitsaustrittsöffnung (34b) des Speichervolumens (34) mit einer Flüssigkeitseintrittsöffnung (48a) des Filters (48) verbindet
- wobei in der Verbindungsleitung (46) eine Drosselvorrichtung (56) vorgesehen ist.

2. Anlage nach Anspruch 1,
**dadurch gekennzeichnet, dass** die eine Öffnung des Filters (48), nämlich dessen Flüssigkeitseintrittsöffnung (48a) oder dessen Flüssigkeitsaustrittsöffnung (48b), an der Unterseite des Filters (48) angeordnet ist, während die jeweils andere Öffnung des Filters (48) an der Oberseite des Filters (48) angeordnet ist.

3. Anlage nach Anspruch 2,
**dadurch gekennzeichnet, dass** die Flüssigkeitseintrittsöffnung (48a) an der Unterseite und die Flüssigkeitsaustrittsöffnung (48b) an der Oberseite des Filters (48) angeordnet ist.

4. Anlage nach einem der Ansprüche 1 bis 3,
**dadurch gekennzeichnet, dass** die Flüssigkeitsaustrittsöffnung (48b) des Filters (48) unterhalb der Flüssigkeitsaustrittsöffnung (34b) des Speichervolumens (34), allenfalls auf gleicher Höhe wie die Flüssigkeitsaustrittsöffnung (34b) des Speichervolumens (34), angeordnet ist.

5. Anlage nach einem der Ansprüche 1 bis 4,
**dadurch gekennzeichnet, dass** die Flüssigkeitsaustrittsöffnung (48b) des Filters (48) unterhalb des Ablaufs (50), allenfalls auf gleicher Höhe wie der Ablauf (50), angeordnet ist.

6. Anlage nach einem der Ansprüche 1 bis 5,
**dadurch gekennzeichnet, dass** der wenigstens eine Filter (48) in einem unabhängig von dem Speichervolumen (34) im Erdreich verbauten Schacht (54) angeordnet ist.

7. Anlage nach einem der Ansprüche 1 bis 6,
**dadurch gekennzeichnet, dass** das Speichervolumen (34) einen Stützkörper (36) umfasst, wobei zumindest die Bodenfläche und die Seitenflächen, und vorzugsweise auch die Deckenfläche, dieses Stützkörpers (36) gegen den Durchtritt von Flüssigkeit abgedichtet sind.

8. Anlage nach Anspruch 7,
**dadurch gekennzeichnet, dass** der Stützkörper (36) aus einer Mehrzahl von Rigoleneinheiten (38) gebildet ist.

9. Anlage nach Anspruch 7 oder 8,
**dadurch gekennzeichnet, dass** der Stützkörper (36) zumindest seiner Bodenfläche benachbart wenigstens ein die Strömung von Flüssigkeit behinderndes Element (42) aufweist.

10. Anlage nach einem der Ansprüche 1 bis 9,
**dadurch gekennzeichnet, dass** die Flüssigkeitsaustrittsöffnung (34b) des Speichervolumens (34) um einen vorbestimmten Abstand (d) oberhalb der inneren Bodenfläche (34c) des Speichervolumens (34) angeordnet ist.

11. Anlage nach einem der Ansprüche 1 bis 10,
**dadurch gekennzeichnet, dass** die Flüssigkeitsaustrittsöffnung (48b) des Filters (48) mit einer Versickerungsvorrichtung (52) verbunden ist, deren Austrittsöffnungen (52a) einen Ablauf (50) bilden.

12. Anlage nach Anspruch 11,
**dadurch gekennzeichnet, dass** die Versickerungsvorrichtung (52) unterhalb des Speichervolumens (34) angeordnet ist.

13. Anlage nach einem der Ansprüche 1 bis 12,
**dadurch gekennzeichnet, dass** die Drosselvorrichtung (56) eine Pumpe (160) ist.

14. Anlage nach einem der Ansprüche 1 bis 13,
**dadurch gekennzeichnet, dass** die Vorreinigungsvorrichtung von einer Sedimentationsvorrichtung (16) gebildet ist.

## Claims

1. System (10) for rainwater management, comprising:
- at least one inlet (12) through which untreated rainwater is introduced into the system (10),
- at least one storage volume (34) for temporarily storing rainwater,
- at least one filter (48) which filters the rainwater,
- at least one outlet (50) through which filtered rainwater leaves the system (10) again, and
- at least one pre-treatment device (16) between the at least one inlet (12) and the at least one storage volume (34), in which pre-treatment device the rainwater is pre-treated, wherein each inlet (12) is connected to at least one pre-treatment device (16) in such a way that all of the rainwater introduced into the system (10) is compulsorily fed to a pre-treatment device (16),
- wherein each inlet (12) is connected to the at least one storage volume (34) in such a way, and each storage volume (34) is connected to the at least one filter (48) in such a way, and/or each inlet (12) is connected to the at least one filter (48) in such a way that all of the rainwater is compulsorily fed to the filter (48),
- wherein each filter (48) is connected to the at least one outlet (50),
- wherein the system (10) comprises a connection line (46) which connects a fluid outflow opening (34b) of the storage volume (34) to a fluid inflow opening (48a) of the filter (48), and
- wherein a throttle device (56) is provided in the connection line (46).

2. System according to claim 1, **characterised in that** one opening of the filter (48), specifically the fluid inflow opening (48a) thereof or the fluid outflow opening (48b) thereof, is arranged on the bottom of the filter (48) while the respective other opening of the filter (48) is arranged on the top of the filter (48).

3. System according to claim 2, **characterised in that** the fluid inflow opening (48a) is arranged on the bottom and the fluid outflow opening (48b) is arranged on the top of the filter (48).

4. System according to any of claims 1 to 3, **characterised in that** the fluid outflow opening (48b) of the filter (48) is arranged below the fluid outflow opening (34b) of the storage volume (34), or at most at the same height as the fluid outflow opening (34b) of the storage volume (34).

5. System according to any of claims 1 to 4, **characterised in that** the fluid outflow opening (48b) of the filter (48) is arranged below the outlet (50), or at most at the same height as the outlet (50).

6. System according to any of claims 1 to 5, **characterised in that** the at least one filter (48) is arranged in a shaft (54) which is built into the ground independently of the storage volume (34).

7. System according to any of claims 1 to 6, **characterised in that** the storage volume (34) comprises a support element (36), at least the bottom surface and the side surfaces, and preferably also the cover surface, of said support element (36) being sealed against penetration by fluid.

8. System according to claim 7, **characterised in that** the support element (36) is formed of a plurality of infiltration ditch units (38).

9. System according to either claim 7 or claim 8, **characterised in that** the support element (36) comprises, at least adjacently to the bottom surface thereof, at least one element (42) impeding the flow of fluid.

10. System according to any of claims 1 to 9, **characterised in that** the fluid outflow opening (34b) of the storage volume (34) is arranged at a predetermined distance (d) above the inner bottom surface (34c) of the storage volume (34).

11. System according to any of claims 1 to 10, **characterised in that** the fluid outflow opening (48b) of the filter (48) is connected to a percolation device (52), the outflow openings (52a) of which form an outlet (50).

12. System according to claim 11, **characterised in that** the percolation device (52) is arranged below the storage volume (34).

13. System according to any of claims 1 to 12, **characterised in that** the throttle device (56) is a pump (160).

14. System according to any of claims 1 to 13, **characterised in that** the pre-treatment device is formed by a sedimentation device (16).

## Revendications

1. Installation (10) d'exploitation d'eau de pluie, comprenant :
- au moins une amenée (12) à travers laquelle de l'eau de pluie non polluée est introduite dans l'installation (10),
- au moins un volume d'accumulateur (34) pour l'entreposage intermédiaire d'eau de pluie,
- au moins un filtre (48) qui filtre l'eau de pluie,
- au moins une évacuation (50) à travers laquelle l'eau de pluie filtrée quitte l'instillation (10), et
- entre l'au moins une amenée (12) un et l'au moins un volume d'accumulateur (34), au moins un dispositif de préépuration (16) dans lequel l'eau de pluie est pré-épurée, chaque amenée (12) étant raccordée à au moins un dispositif de préépuration (16) de telle sorte que la totalité de l'eau de pluie introduite dans l'installation (10) est conduite de façon forcée à un dispositif de préépuration (16),
- chaque amenée (12) étant raccordée à l'au moins un volume d'accumulateur (34), et chaque volume d'accumulateur (34) étant raccordé à l'au moins un filtre (48), et/ou chaque amenée (12) étant raccordée à l'au moins un filtre (48) de telle sorte que la totalité de l'eau de pluie est conduite de façon forcée au filtre (48),
- chaque filtre (48) étant raccordé à l'au moins une évacuation (50), et l'installation (10) présentant une conduite de raccordement (46) qui raccorde une ouverture de sortie de liquide (34b) du volume d'accumulateur (34) à une ouverture d'entrée de liquide (48a) du filtre (48).
- un dispositif d'étranglement (56) étant prévu dans la conduite de raccordement (46).

2. Installation selon la revendication 1,
**caractérisée en ce qu'**une ouverture du filtre (48), à savoir son ouverture d'entrée de liquide (48a) ou son ouverture de sortie de liquide (48b), est disposée sur le côté inférieur du filtre (48) tandis que l'autre ouverture du filtre (48) est disposée sur le côté supérieur du filtre (48).

3. Installation selon la revendication 2,
**caractérisée en ce que** l'ouverture d'entrée de liquide (48a) est disposée sur le côté inférieur du filtre (48) et l'ouverture de sortie de liquide (48b) est disposée sur le côté supérieur du filtre (48).

4. Installation selon l'une des revendications 1 à 3,
**caractérisée en ce que** l'ouverture de sortie de liquide (48b) du filtre (48) est disposée au-dessous de l'ouverture de sortie de liquide (34b) du volume d'accumulateur (34), en tout cas à la même hauteur que l'ouverture de sortie de liquide (34b) du volume d'accumulateur (34).

5. Installation selon l'une des revendications 1 à 4,
**caractérisée en ce que** l'ouverture de sortie de liquide (48b) du filtre (48) est située au-dessous de l'évacuation (50), en tout cas à la même hauteur que l'évacuation (50).

6. Installation selon l'une des revendications 1 à 5,
**caractérisée en ce que** l'au moins un filtre (48) est disposé dans un puits (54) monté dans le sol indépendamment du volume d'accumulateur (34).

7. Installation selon l'une des revendications 1 à 6,
**caractérisée en ce que** le volume d'accumulateur (34) comprend un corps d'appui (36), au moins la surface de sol et les surfaces latérales, et de préférence également la surface de plafond, de ce corps d'appui (36) étant rendues étanches à la traversée de liquide.

8. Installation selon la revendication 7,
**caractérisée en ce que** le corps d'appui (36) est formé d'une pluralité d'unités de rigole (38).

9. Installation selon la revendication 7 ou 8,
**caractérisée en ce que** le corps d'appui (36), au moins à proximité de sa surface de sol, présente au moins un élément (42) faisant obstacle à l'écoulement de liquide.

10. Installation selon l'une des revendications 1 à 9,
**caractérisée en ce que** l'ouverture de sortie de liquide (34b) du volume d'accumulateur (34) est disposée à une distance (d) prédéfinie au-dessus de la surface de sol (34c) intérieure du volume d'accumulateur (34).

11. Installation selon l'une des revendications 1 à 10, **caractérisée en ce que** l'ouverture de sortie de liquide (48b) du filtre (48) est raccordée à un dispositif d'infiltration (52) dont les ouvertures de sortie (52a) forment une évacuation (50).

12. Installation selon la revendication 11,
**caractérisée en ce que** le dispositif d'infiltration (52) est disposé au-dessous du volume d'accumulateur (34).

13. Installation selon l'une des revendications 1 à 12, **caractérisée en ce que** le dispositif d'étranglement (56) est une pompe (160).

14. Installation selon l'une des revendications 1 à 13,
**caractérisée en ce que** le dispositif de préépuration est formé d'un dispositif de sédimentation (16).
